# EUROPEAN PATENT APPLICATION

(11) **EP 4 822 535 A1**
(43) Date of publication of application: **14.10.2026**
(21) Application number: 26170159.3
(22) Date of filing: 01.04.2026
(51) Int. Cl.: G06F 11/00, G06F 11/30, G06F 11/34, G06F 16/2455

(54) **FORECASTING MACHINE FAILURES TOWARDS IMPROVING MACHINE LEARNING WORKLOAD RELIABILITY**

(30) Priority: 08.04.2025 US 202563785416 P; 16.03.2026 US 202619568594
(71) Applicant: Google LLC, Mountain View, CA 94043 (US)
(72) Inventor: SANKARAN, Sethuraman, Mountain View, 94043 (US); CAI, Shengnan, Mountain View, 94043 (US); GULALKARI, Nupur, Mountain View, 94043 (US); JAIN, Chetna, Mountain View, 94043 (US); DOURNOV, Pavel, Mountain View, 94043 (US); CHEN, Zhehui, Mountain View, 94043 (US); LAVRINENKO, Sergii, Mountain View, 94043 (US); HARRAT, Newfel, Mountain View, 94043 (US)
(74) Representative: Betten & Resch

(57) **Abstract**

A computing device may be configured to receive telemetry data from multiple machines in a distributed computing environment, including time-series metrics and categorical features associated with machine-level operations. The telemetry data is processed using a machine learning model to generate predictive output, such as failure probabilities, time-to-failure estimates, or categorical health classifications. This predictive output is stored in association with machine identifiers and contextual information. As new telemetry data is received, the stored machine health data is periodically updated with refreshed predictions. Portions of the stored health data may be output for display to a user device to enable monitoring or trigger automated mitigation actions. Based on the displayed information, processing instructions may be received to initiate mitigation actions for selected machines, enabling proactive management of hardware resources based on anticipated reliability outcomes.

## Description

### CROSS REFERENCE TO RELATED APPLICATION

This application claims the benefit of U.S. Provisional Patent Application No. 63/785,416 filed April 8th, 2025, which is incorporated by reference herein in its entirety.

### BACKGROUND

Contemporary computing infrastructure supporting artificial intelligence (AI) and machine learning (ML) workloads utilize distributed systems having accelerators, such as graphics processing units (GPUs) and tensor processing units (TPUs), operating at datacenter scale. These platforms are structured to support parallel computation, high-throughput data exchange, and multitenant orchestration across complex hardware and software stacks. Within such environments, telemetry systems are commonly used to collect fine-grained operational metrics reflecting the behavior of individual components and the system as a whole.

This telemetry may include measurements related to thermal profiles, power consumption, memory utilization, network activity, and other low-level indicators of system state. The availability of this data has enabled a broad range of studies in systems performance, fault characterization, and infrastructure observability. In large-scale ML contexts, the interplay between hardware health, workload scheduling, and system efficiency has become an area of active research, with particular interest in understanding temporal trends and cross-component dependencies under diverse workload and operating conditions.

### SUMMARY

In general, the techniques of this disclosure are directed to predictive machine health monitoring in distributed computing environments using machine learning. A computing system receives data from multiple machines, including time-series telemetry metrics such as GPU or TPU temperature, power usage, power transmission rates such as receive/transmit (Rx/Tx) power, error rates, and categorical features associated with the device, such as device type and age. The collected data is processed by a machine learning model to generate predictive outputs, such as failure probabilities, time-to-failure estimates, or categorical health classifications. In some examples, the machine learning model may be a one-dimensional convolutional neural network (1D-CNN), a gradient-boosted decision tree (GBDT), a transformer-based sequence model, or a mixture-of-experts architecture. According to certain examples, the computing system stores predictions in association with machine identifiers and contextual metadata and periodically updates the predictions as new telemetry becomes available. The computing system may output portions of the stored health data to a display device to support user awareness or automated system response. The system may receive processing instructions, such as initiating checkpointing, excluding machines from active job scheduling, reallocating tasks using elastic scheduling, or swapping machines as part of elastic training. In some examples, the computing system provides the predictive output to a job orchestration service configured to perform workload adjustments based on health scores. By anticipating failures before they occur, the system enables proactive maintenance, fewer service disruptions, and more resilient ML workloads.

In one example, this disclosure describes a method that includes receiving, by one or more processors from a plurality of machines in a distributed computing environment, telemetry data comprising time-series metrics and categorical features associated with machine-level operations. According to certain examples, the method includes processing, by the one or more processors using a machine learning model, the telemetry data to generate predictive output for each machine indicating at least one of: a probability of failure, a time-to-failure estimate, or a categorical health classification. In at least one example, the method includes storing, by the one or more processors, the predictive output in association with corresponding machine identifiers and telemetry context for the plurality of machines as stored machine health data. According to such examples, the method includes periodically updating, by the one or more processors using the machine learning model, the stored machine health data with new predictive output based on newly received telemetry data for the plurality of machines. In one example, the method includes outputting, by the one or more processors and for display to a user device, at least a portion of the stored machine health data. According to certain examples, the method includes receiving, by the one or more processors, processing instructions for one or more of the plurality of machines in response to outputting the portion of the stored machine health data for display to the user device.

In another example, this disclosure describes a computing device having a machine learning model. In at least one example, the computing system comprises one or more processors. According to certain examples, the computing system comprises a display device. In one example, the computing system comprises non-transitory computer-readable media storing instructions that, when executed by the one or more processors, configure the one or more processors to receive telemetry data from a plurality of machines in a distributed computing environment, the telemetry data comprising time-series metrics and categorical features associated with machine-level operations. According to such examples, the instructions further configure the one or more processors to process the telemetry data using the machine learning model to generate predictive output for each machine indicating at least one of: a probability of failure, a time-to-failure estimate, or a categorical health classification. In one example, the instructions configure the one or more processors to store the predictive output in association with corresponding machine identifiers and telemetry context for the plurality of machines as stored machine health data. According to certain examples, the instructions further configure the one or more processors to periodically update the stored machine health data with new predictive output based on newly received telemetry data for the plurality of machines using the machine learning model. In at least one example, the instructions configure the one or more processors to output at least a portion of the stored machine health data to the display device. According to such examples, the instructions configure the one or more processors to receive processing instructions for one or more of the plurality of machines in response to outputting the portion of the stored machine health data to the display device.

In another example, this disclosure describes a non-transitory computer-readable storage medium encoded with instructions that, when executed by one or more processors, cause the one or more processors to receive telemetry data from a plurality of machines in a distributed computing environment, the telemetry data comprising time-series metrics and categorical features associated with machine-level operations. In at least one example, the instructions configure the one or more processors to process the telemetry data using a machine learning model to generate predictive output for each machine indicating at least one of: a probability of failure; a time-to-failure estimate; or a categorical health classification. According to certain examples, the instructions further configure the one or more processors to store the predictive output in association with corresponding machine identifiers and telemetry context for the plurality of machines as stored machine health data. In one example, the instructions configure the one or more processors to periodically update the stored machine health data with new predictive output based on newly received telemetry data for the plurality of machines using the machine learning model. In at least one example, the instructions configure the one or more processors to output at least a portion of the stored machine health data to a display device. According to such examples, the instructions configure the one or more processors to receive processing instructions for one or more of the plurality of machines in response to outputting the portion of the stored machine health data to the display device.

In an example, a computing device may be configured to receive telemetry data from multiple machines in a distributed computing environment, including time-series metrics and categorical features associated with machine-level operations. The telemetry data is processed using a machine learning model to generate predictive output, such as failure probabilities, time-to-failure estimates, or categorical health classifications. This predictive output is stored in association with machine identifiers and contextual information. As new telemetry data is received, the stored machine health data is periodically updated with refreshed predictions. Portions of the stored health data may be output for display to a user device to enable monitoring or trigger automated mitigation actions. Based on the displayed information, processing instructions may be received to initiate mitigation actions for selected machines, enabling proactive management of hardware resources based on anticipated reliability outcomes.

The details of one or more examples are set forth in the accompanying drawings and the description below. Other features, objects, and advantages of the disclosure will be apparent from the description and drawings, and from the claims.

### BRIEF DESCRIPTION OF DRAWINGS

FIG. 1 is a block diagram illustrating an example computing device configured in accordance with techniques described in this disclosure.
FIG. 2 is a block diagram illustrating an example predictor flow for a Cluster Health Predictor (CHP) system configured to forecast failures in machines prior to disruptive events, in accordance with techniques described in this disclosure.
FIG. 3 is a diagram illustrating an example labeling process for machine health prediction instances using observation and prediction windows, in accordance with techniques described in this disclosure.
FIG. 4 is a diagram illustrating an example telemetry pipeline architecture and representative feature set used for health prediction in computing clusters, in accordance with techniques described in this disclosure.
FIG. 5 is a flow diagram illustrating an example data preparation pipeline for machine health prediction, in accordance with techniques described in this disclosure.
FIG. 6 is a diagram illustrating an example machine learning model architecture used to predict machine failure within a future time window, in accordance with techniques described in this disclosure.
FIG. 7 is a diagram illustrating an example data preparation and training architecture for machine health forecasting, in accordance with techniques described in this disclosure.
FIG. 8 is a diagram illustrating a time-series alignment strategy used in preparing data for forecasting machine health outcomes, in accordance with techniques described in this disclosure.
FIG. 9 is a system diagram illustrating the architecture for elastic training via high-precision node failure prediction, in accordance with techniques described in this disclosure.
FIG. 10 is a flow chart illustrating an example operation of the processing and outputting of the predictive output for machine health forecasting, in accordance with one or more techniques of this disclosure.

### DETAILED DESCRIPTION

In general, the techniques of this disclosure are directed to predictive machine health monitoring in distributed computing environments using machine learning. A computing system receives data from multiple machines, including time-series telemetry metrics such as GPU or TPU temperature, power usage, power transmission rates such as Rx/Tx power, error rates, and categorical features associated with the device, such as device type and age. The collected data is processed by a machine learning model to generate predictive outputs, such as failure probabilities, time-to-failure estimates, or categorical health classifications. In some examples, the machine learning model may be a one-dimensional convolutional neural network (1D-CNN), a gradient-boosted decision tree (GBDT), a transformer-based sequence model, or a mixture-of-experts architecture. According to certain examples, the computing system stores predictions in association with machine identifiers and contextual metadata and periodically updates the predictions as new telemetry becomes available. The computing system may output portions of the stored health data to a display device to support user awareness or automated system response. The system may receive processing instructions, such as initiating checkpointing, excluding machines from active job scheduling, reallocating tasks using elastic scheduling, or swapping machines as part of elastic training. In some examples, the computing system provides the predictive output to a job orchestration service configured to perform workload adjustments based on health scores. By anticipating failures before they occur, the system enables proactive maintenance, fewer service disruptions, and more resilient ML workloads.

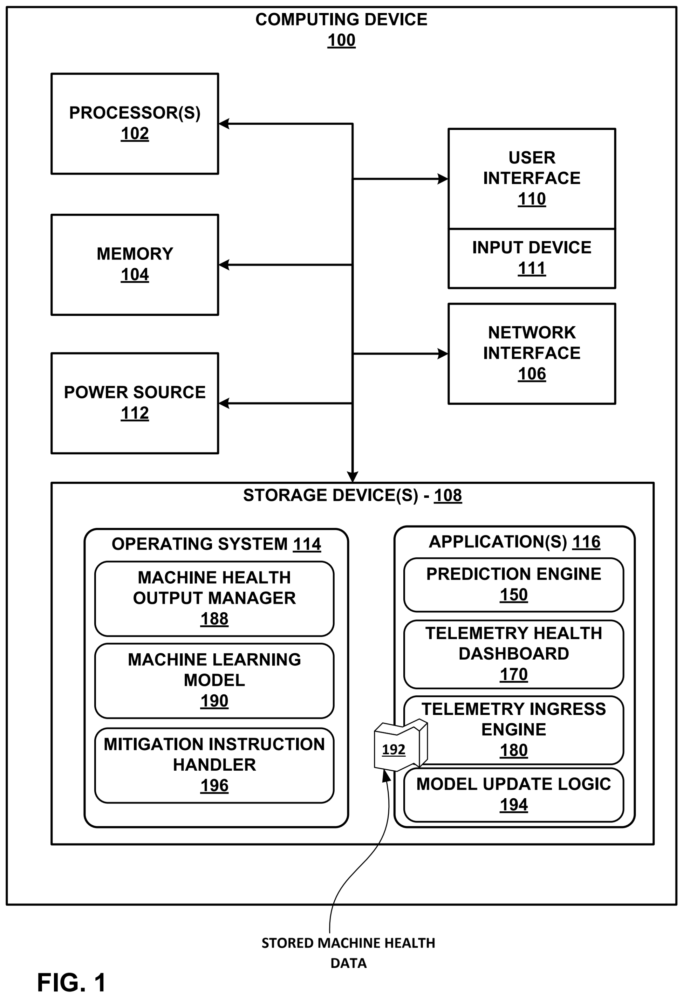

FIG. 1 is a block diagram illustrating an example computing device 100 configured in accordance with techniques described in this disclosure. FIG. 1 illustrates only one example configuration of computing device 100, and many other configurations are possible. Computing device 100 may perform any of the operations described in connection with the methods, systems, and media disclosed throughout this document.

As shown in the example of FIG. 1, computing device 100 includes one or more processors 102, memory 104, network interface 106, one or more storage devices 108, user interface 110, input device 111, and power source 112. Storage devices 108 may store an operating system 114 and one or more applications 116. The components of computing device 100 may be interconnected physically, communicatively, and/or operatively for inter-component communication.

Processor(s) 102 may implement functionality or execute instructions within computing device 100. For example, processor(s) 102 may process instructions stored in memory 104 or storage device(s) 108. Processor(s) 102 may be configured to execute components such as machine learning model 190, telemetry ingress engine 180, and prediction engine 150. These components collectively facilitate the receipt of telemetry data from distributed machines, processing that data using a machine learning model, and generating predictive output related to machine health, including failure probabilities, time-to-failure estimates, or health classifications.

Memory 104 may store information during operation of computing device 100. In some examples, memory 104 may be a volatile memory, such as random access memory (RAM), dynamic RAM (DRAM), or static RAM (SRAM). In some examples, memory 104 may be used by software or applications running on computing device 100 to temporarily store data and/or instructions during execution.

Storage device(s) 108 may include one or more non-transitory computer-readable media and may be configured for long-term storage of software instructions and data. Examples of storage device(s) 108 include hard drives, flash memory, optical media, or EEPROM. Storage device(s) 108 may store operating system 114, which may manage hardware resources and facilitate the execution of software applications. Operating system 114 may include components such as machine health output manager 188, machine learning model 190, and mitigation instruction handler 196.

Applications 116 may include executable software components such as prediction engine 150, telemetry health dashboard 170, telemetry ingress engine 180, and model update logic 194. In one example, telemetry ingress engine 180 receives time-series telemetry data and categorical features from machines in a distributed computing environment. Prediction engine 150 processes this telemetry using machine learning model 190 to generate predictive output for each machine. Model update logic 194 may support periodic retraining or refinement of machine learning model 190. The output of these components may be stored as machine health data 192, which associates predictions with machine identifiers and telemetry context for later retrieval.

Telemetry health dashboard 170 may output at least a portion of the stored machine health data to a display device, such as user interface 110. Machine health output manager 188 may format or prioritize information for display or downstream orchestration services. Mitigation instruction handler 196 may receive processing instructions from users or systems and initiate responsive actions for the affected machines, such as checkpointing, job deferral, or reassignment based on health classifications.

Network interface 106 may facilitate communication between computing device 100 and external systems via wired or wireless connections. Interfaces may include Ethernet, cellular (e.g., 4G, 5G), WI-FI^{®}, or other communication protocols suitable for telemetry transmission and system coordination.

User interface 110 may include a visual display, touchscreen, or other output component for presenting health indicators, alerts, or configuration options. Input device 111 may include a touch-sensitive interface, keyboard, mouse, microphone, or other sensor capable of receiving user input for inspection or control over telemetry display, inference output, or mitigation directives.

Power source 112 may include rechargeable batteries or permanent power supplies, capable of powering computing device 100 under various deployment conditions.

Although illustrated with distinct components, the functionality of one or more modules of computing device 100 may be combined or distributed across multiple devices, virtualized environments, or system layers. In various examples, the components shown in FIG. 1 may operate in coordination with external systems such as orchestration frameworks, distributed training pipelines, cloud services, or machine-level agents.

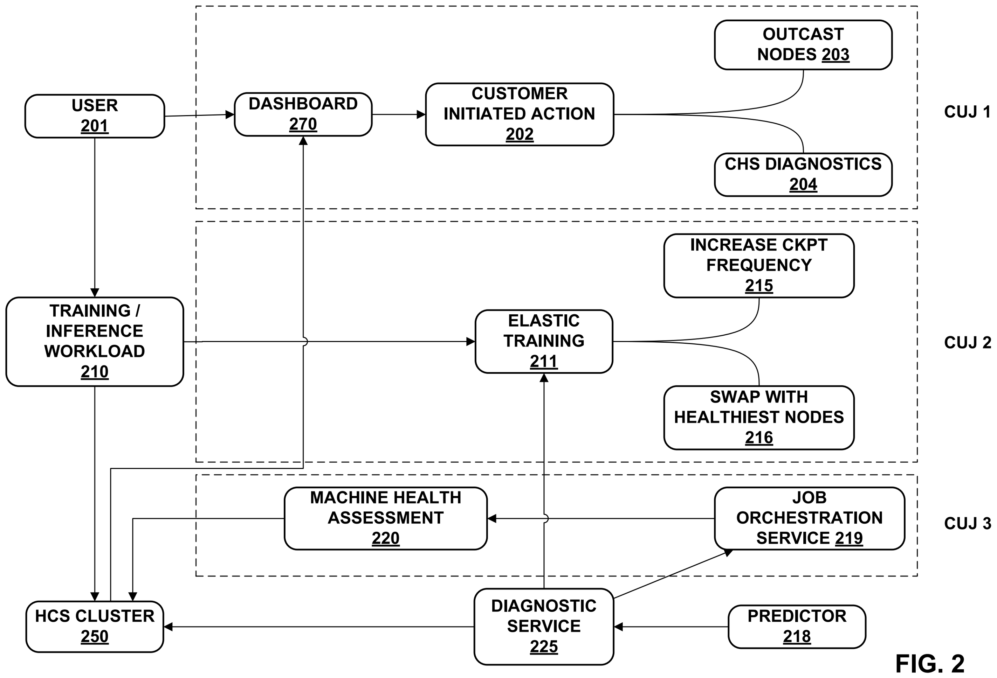

FIG. 2 is a block diagram illustrating an example predictor flow for an AI Cluster Health Predictor (CHP) system configured to forecast failures in machines prior to disruptive events, in accordance with one or more aspects of the present disclosure. The example of FIG. 2 represents a system designed to support dynamic job resilience in machine learning (ML) workloads through predictive diagnostics, intelligent orchestration, and elastic training adjustments.

Traditional diagnostic frameworks typically operate in a reactive manner, identifying hardware or software faults only after a workload has been interrupted or failed. In contrast, the CHP system described herein is designed to proactively forecast failures at the machine level before such disruptions occur. By leveraging predictive modeling based on historical telemetry data, the CHP system provides forward-looking assessments of system health in real-time. This predictive capability enables preemptive interventions, such as dynamic checkpointing, node reassignment, or scheduling deferrals, that enhance overall system reliability and improve resilience in large-scale machine learning (ML) training and inference workloads.

As depicted here, a user 201 may interface with a dashboard component 270 that enables interaction with ML workloads and visual representations of cluster health, including dashboards and interactive playbooks. A customer-initiated action 202, initiated through the dashboard 270, may lead to corrective procedures, such as cluster health scanner (CHS) diagnostics 204 to evaluate cluster health or outcasting nodes 203 to isolate compromised nodes from other nodes in the cluster. Alternatively, only sensitive workloads, where the cost of unexpected interruption is high (e.g., large scale training workloads) can avoid using nodes that are predicted to fail while insensitive workloads can continue using them. This can safeguard against the cost of false positives. These actions define CUJ 1 (Customer Use Journey 1) and are typically manually initiated responses to health degradation.

In CUJ 2, the system supports automated resilience of a training/inference workload 210 through an elastic training component 211. The elastic training module 211 dynamically responds to system diagnostics by performing automated operations, such as increasing checkpoint (CKPT) frequency 215 or swapping workload execution to the healthiest nodes available in the cluster 216. These interventions are informed by ongoing assessments of system state.

The system performs continuous machine health assessment 220 based on telemetry received from the cluster and diagnostics generated by a diagnostic service 225. These modules generate predictive health scores or failure metrics associated with individual nodes or machines in an HCS cluster (Health-Checked System cluster) 250. These scores may then be consumed by job orchestrators and elastic training systems to guide proactive actions.

In CUJ 3, orchestration logic via job orchestration service 219 receives input from the predictor 218 and machine health assessment components 220. Job orchestration service 219 (e.g., Slurm or Kubernetes scheduler) schedules jobs while avoiding nodes flagged as high-risk by the CHP system. A predictor module 218 acts as the central intelligence, aggregating diagnostic signals and computing forward-looking risk scores or failure likelihoods for specific compute nodes.

Through the interactions illustrated in FIG. 2, the CHP system reduces the mean time between interruptions (MTBI) and mean time to recovery (MTTR) in ML workloads. By combining predictive diagnostics, automated checkpointing, dynamic node reassignment, and health-aware scheduling, the system enhances ML workload resilience and cluster reliability while empowering both internal operators and external customers with visibility and actionable metrics.

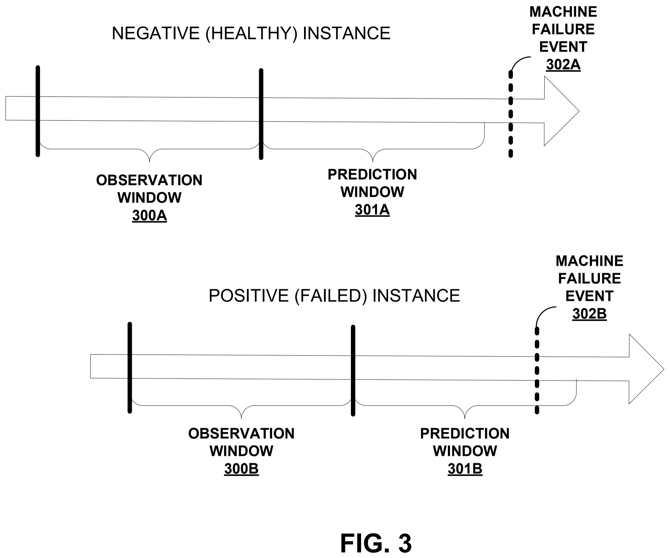

FIG. 3 is a diagram illustrating an example labeling process for machine health prediction instances using observation windows 300A, 300B and prediction windows 301A, 301B, in accordance with one or more aspects of the present disclosure. The two example scenarios correspond to a negative (healthy) instance and a positive (failed) instance, as used in the training and inference stages of the CHP system. Each instance is defined with respect to an observation window 300A, 300B followed by a prediction window 301A, 301B, relative to a potential machine failure event 302A, 302B. As used herein, the observation window 300A, 300B refers to a lookback interval during which telemetry features (e.g., such as GPU temperature, power utilization, and streaming multiprocessor (SM) utilization) are collected from the machine. The prediction window 301A, 301B refers to a lookahead interval during which the system evaluates whether a machine failure event will occur.

As shown here, the negative (healthy) instance includes a defined observation window 300A, during which telemetry and other machine data are collected, followed by a prediction window 301A during which no failure occurs (i.e., machine failure event 302A occurs after the prediction window 301A closes). The absence of a failure during the prediction window 301A is used to label this instance as negative. In contrast, the positive (failed) instance also includes an observation window 300B followed by a prediction window 301B; however, in this case, a machine failure event 302B occurs during the prediction window 301B. This failure event 302B is used to label the instance as positive for training or inference purposes.

The CHP system processes telemetry input within an observation window and outputs a machine health score or classification that estimates the likelihood of a failure occurring during a prediction window. These classifications may include, for example, HEALTHY, WARNING, or UNHEALTHY, based on a thresholding scheme applied to the predicted failure probability. The underlying model may be trained using supervised learning techniques based on historical failure events and their corresponding observation/prediction windows.

The approach enables the system to continuously evaluate machine states using real-time input streams and label them based on proximity to known or anticipated failure events. This approach supports dynamic health scoring and allows for early mitigation actions, such as checkpointing or node replacement, before actual failures occur.

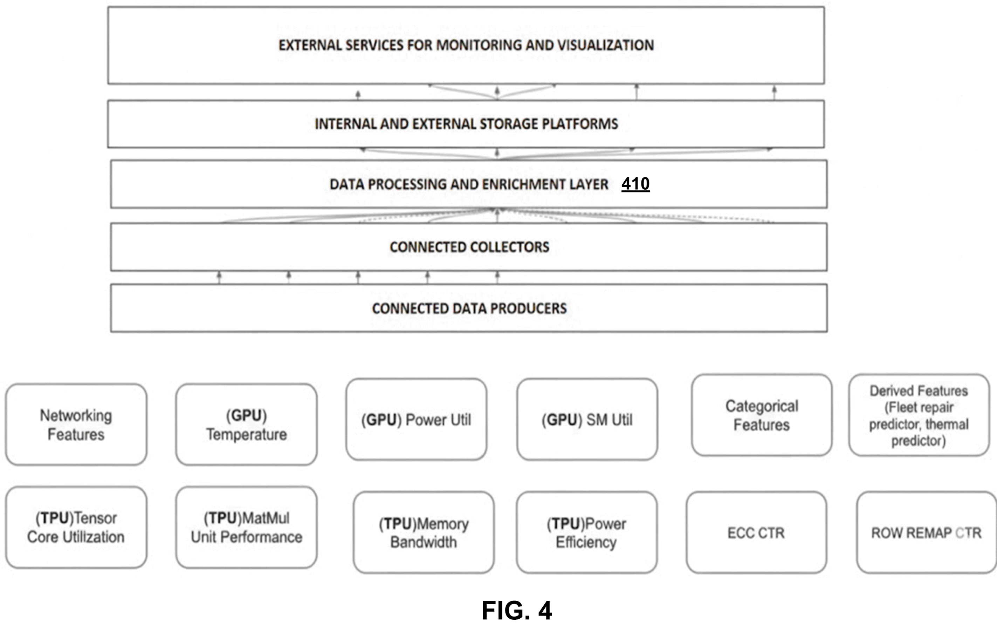

FIG. 4 is a diagram illustrating an example telemetry pipeline architecture and representative feature set used for health prediction in computing clusters, in accordance with one or more aspects of the present disclosure. FIG. 4 depicts the hierarchical data flow from low-level machine data sources to derived feature vectors used in machine learning-based failure prediction systems.

As shown here, telemetry data is initially generated by a variety of producer components, including monitoring services and system instrumentation modules. These producers emit raw machine metrics, including CPU, GPU, TPU, networking, memory, and control plane events, which are collected and aggregated by telemetry collection infrastructure.

Collected data is passed into a centralized processing and enrichment layer 410. This layer normalizes, structures, and enriches the data streams before forwarding them to telemetry processing services. These services perform centralized event analysis across large-scale machine fleets over extended time intervals, enabling detection of statistical patterns and health-related anomalies.

Processed telemetry data is subsequently made accessible to external systems for monitoring, visualization, and analysis. These systems may include dashboards, observability platforms, or analytical services capable of rendering time-series patterns, anomaly scores, and machine-level predictions.

The lower portion of FIG. 4 illustrates example features that may be derived from telemetry collected during an observation window. These features may include hardware-level metrics such as GPU temperature, GPU power utilization, and GPU streaming multiprocessor (SM) utilization. Although illustrated as GPU-specific metrics, in other cases the temperature, power utilization, and streaming SM utilization may be TPU-specific metrics. The hardware-level metrics may further include other TPU-specific metrics such as TPU tensor core utilization, TPU matrix multiplication unit performance, TPU memory bandwidth, and TPU power efficiency. Additional features may include networking features, categorical features, derived features (e.g., fleet repair and/or thermal predictors), and control-plane counters such as an error correction counter (ECC) and a row remap counter.

The feature set provided enables the system to develop a predictive understanding of machine health by capturing both low-level and derived system signals across multiple subsystems. During the observation window, these features are aggregated and supplied to the machine learning model to estimate failure risk in the subsequent prediction window.

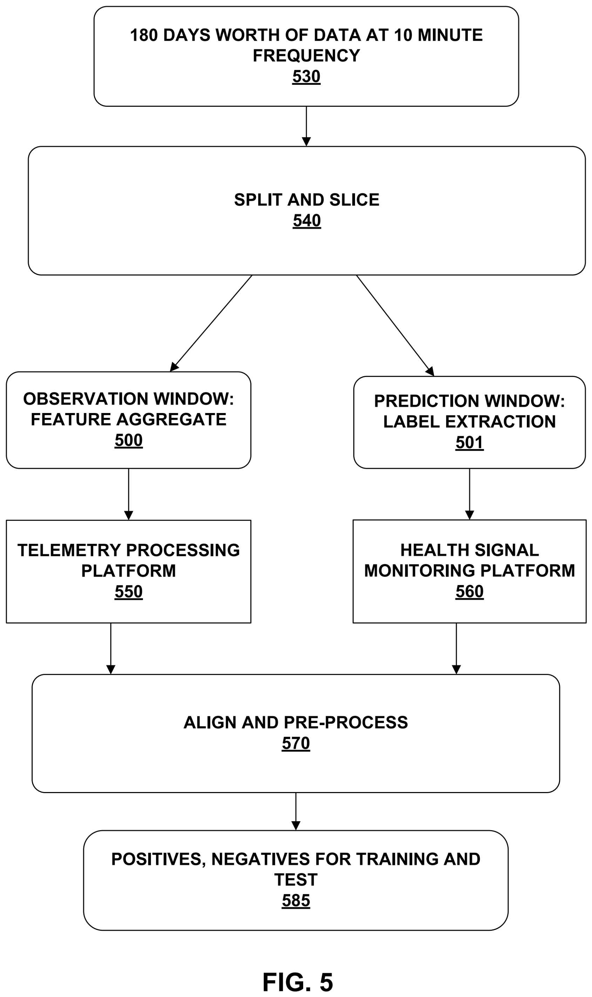

FIG. 5 is a flow diagram illustrating an example data preparation pipeline for machine health prediction, in accordance with one or more aspects of the present disclosure. FIG. 5 depicts the transformation of raw telemetry data into training and test datasets suitable for use in supervised machine learning models.

As shown here, the process begins with the ingestion of approximately 180 days of machine telemetry data sampled at ten-minute intervals 530. This dataset is partitioned and segmented using a split and slice operation 540, which divides the data into two temporal segments: an observation window 500, during which telemetry signals are aggregated, and a prediction window 501, during which the system determines whether a machine failure occurs based on label extraction.

During the observation window 500, system features are aggregated using a telemetry processing platform 550. These features may include hardware-level metrics such as GPU temperature, power utilization, streaming multiprocessor (SM) activity, and other indicators of machine state. In parallel, labels for each instance are extracted based on the outcome of the prediction window 501 using a health signal monitoring platform 560. The label identifies whether a machine failure occurred within the prediction window 501, providing ground truth for classification. The ground truth labels generated for each instance may reflect outcomes obtained from diagnostic tests or system-level indicators recorded during the prediction window 501. These tests help determine whether the machine exhibited symptoms of degraded performance, partial failure, or complete unavailability, thereby anchoring each instance to a verifiable outcome.

Following feature extraction 500 and label generation 501, both datasets are passed through an align and pre-process operation 570 that synchronizes the observation and prediction windows for each instance. This step ensures that features and labels are temporally consistent and aligned to support accurate model training. In some implementations, missing or unavailable features during the observation window are handled using imputation strategies or predefined placeholder tokens (e.g., -1) to maintain consistent tensor shapes and enable robust model performance during both training and inference.

The resulting dataset is then partitioned into positive and negative instances 585 based on the presence or absence of failure within the prediction window. These instances are further divided into training and testing subsets, with an example pipeline generating hundreds of thousands of training and test examples. In some implementations, the pipeline may be executed using a high-performance data processing framework capable of preparing the dataset within a matter of hours.

FIG. 5 illustrates the complete data preparation lifecycle, encompassing feature aggregation, ground truth labeling, and preprocessing to generate machine health classification datasets. To mitigate noise in the ground truth signals, particularly from transient unhealthy conditions, the system requires the detection of multiple consecutive unhealthy snapshots before designating a machine as unhealthy. This approach prevents misclassification due to isolated anomalies, such as transient link flaps, which may cause a single unhealthy snapshot but do not indicate a persistent fault.

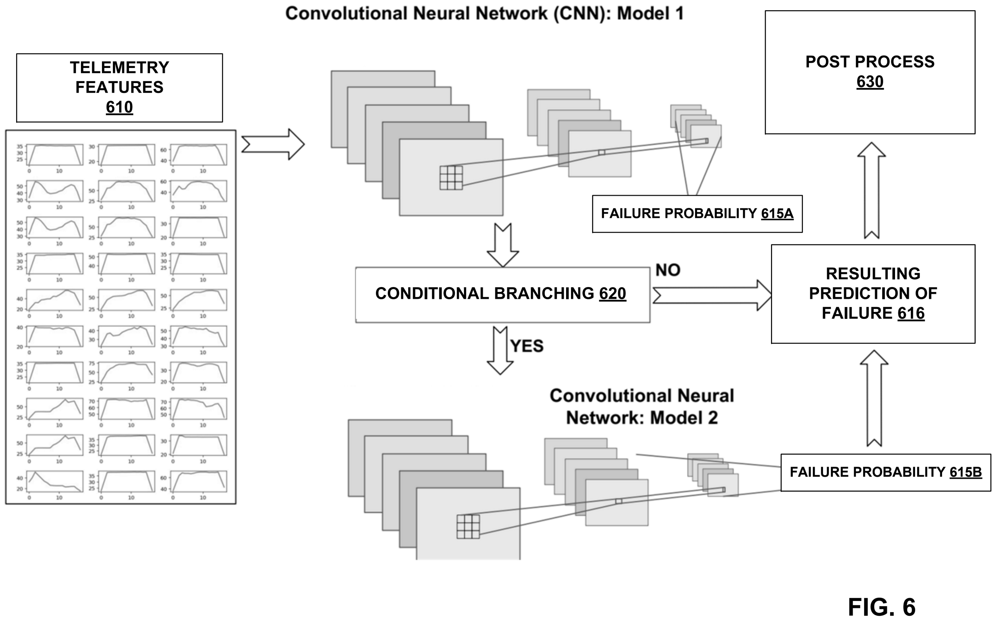

FIG. 6 is a diagram illustrating an example machine learning model architecture used to predict machine failure within a future time window, in accordance with one or more aspects of the present disclosure. The example shown in FIG. 6 depicts a multi-stage inference pipeline that processes time-series telemetry features 610 through one or more convolutional neural networks (CNNs) and outputs a probability of failure for individual machines.

As shown on the left side of FIG. 6, input telemetry features 610 are collected during an observation window. These features may include time-series values associated with hardware telemetry signals, such as power, temperature, utilization metrics, or other operational indicators. The input feature array may be structured such that individual channels correspond to different GPU units or sequential time slices.

According to one particular example, feature data is first processed by a CNN model (Model 1) (illustrated along the top of FIG. 6), which computes an initial failure probability 615A and assesses whether the machine has previously exhibited anomalous or failure-prone characteristics. A conditional branching step 620 evaluates the machine's current and historical health state. If the machine is (i) unhealthy and previously affected or (ii) healthy and previously unaffected (YES branch of 620), the system proceeds to a second CNN model (Model 2) (illustrated along the bottom of FIG. 6), which computes a refined failure probability 615B using an additional inference pass over the same or related input features.

If the condition is not met (NO branch of 620), the system bypasses Model 2 and uses the output from Model 1 as the initial failure probability 615A as the final failure probability estimate. The resulting prediction of failure 616, whether from Model 1 (NO branch of 620) or Model 2 (YES branch of 620), is post-processed 630 into a qualitative classification such as "healthy," "at risk," or "critical/unhealthy," which may then be surfaced to a user interface or passed downstream to scheduling or orchestration components.

The modeling architecture of FIG. 6 supports multiple system use cases. In one use case, the failure prediction supports elastic training, including automatic checkpointing and proactive node-swap operations, which improve workload throughput by minimizing disruptive failures. In another use case, user-facing interfaces expose prediction outputs, allowing users or administrators to proactively checkpoint, scan, or isolate nodes based on predicted risk. In yet another use case, health-aware job scheduling leverages failure probabilities to guide workload placement in orchestration environments.

The ability to predict failures up to several hours in advance enables targeted actions like node reassignment or checkpointing. These interventions help lower failure rates and improve system-level reliability metrics.

While the system is illustrated using convolutional neural networks (CNNs) to process time-series telemetry data, alternative architectures are also used depending on latency or interpretability constraints. These may include gradient-boosted decision trees (GBDT), transformer-based sequence models for long-range temporal dependencies, or mixture-of-experts (MoE) architectures that enable conditional routing based on feature patterns. In some examples, two-tier modeling strategies are deployed in parallel: a high-precision model (e.g., ≥99% precision) is configured to trigger autonomous mitigations such as checkpointing, while a broader-recall model (e.g., 70-75% precision) generates health scores for downstream consumption or operator validation. Unsupervised anomaly detection methods, such as autoencoders or distance-based models, may also be deployed where labeled training data is sparse or unreliable.

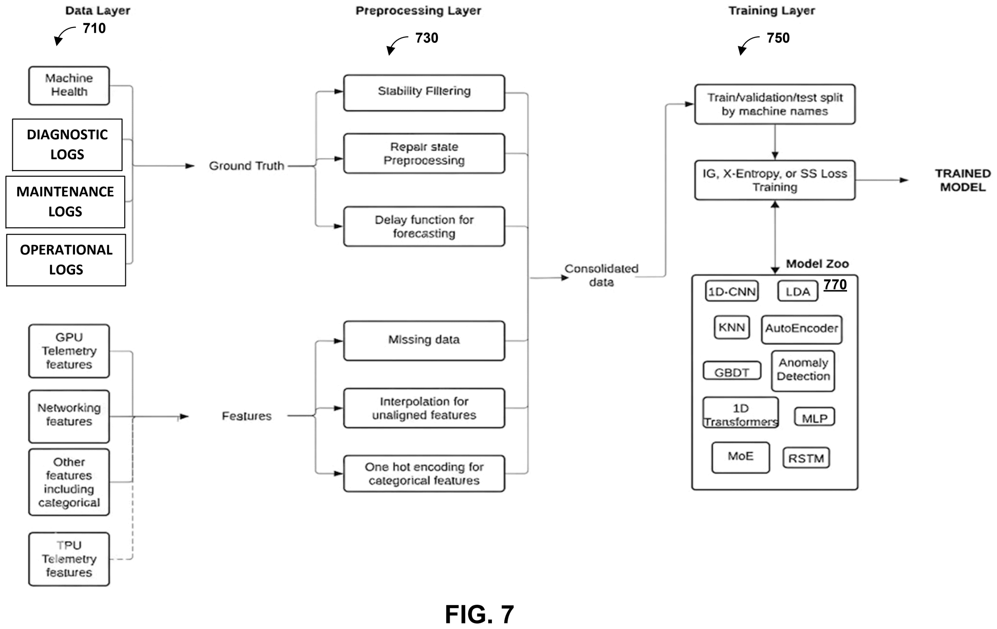

FIG. 7 is a diagram illustrating an example data preparation and training architecture for machine health forecasting, in accordance with one or more aspects of the present disclosure. The pipeline includes a data layer 710, a preprocessing layer 730, and a training layer 750, each responsible for transforming raw machine and telemetry data into supervised learning models capable of predicting machine failure risk.

In the data layer 710, input signals are sourced from both telemetry and labeled event systems. Telemetry-based features may include GPU and TPU hardware metrics, network-related indicators, and additional categorical or system-level features. Labeled ground truth is obtained from machine health logs, logs of diagnostic scoring systems, maintenance logs, and operational logs. These labels reflect machine health status based on operational outcomes such as job interruption, hardware decommissioning, or repeated failures.

In certain examples, a preprocessing layer 730 may include stability filtering, interpolation for unaligned features, missing value padding (e.g., using -1), and one-hot encoding of categorical inputs. Repair state alignment and delay function estimation are applied to associate ground truth timestamps with their corresponding telemetry context. A rule-based filter improves label stability: In some examples, preprocessing layer 730 may apply a threshold and suggest that only if the fraction of snapshots that satisfy the condition exceeds the threshold, will preprocessing layer 730 associate a label with a time-series. This threshold minimizes false positives from transient hardware blips, balancing sensitivity with operational reliability.

The training layer 750 splits the data into training, validation, and test subsets by machine identifier. The resulting datasets are used to train models from a model zoo 770, which may include one-dimensional convolutional neural networks (1D-CNNs), gradient-boosted decision trees (GBDT), k-nearest neighbors (KNN), linear discriminant analysis (LDA), multilayer perceptrons (MLPs), autoencoders, mixture-of-experts (MoE), transformer-based models, and anomaly detection models. Loss functions may include cross-entropy, information gain, or self-supervised losses, depending on the training objective.

In some implementations, two distinct model tiers are deployed: a high-precision model (≥99% precision) for autonomous mitigation triggers, and a broader-recall model (e.g., 70-75% precision) requiring additional filtering or verification. In scenarios lacking reliable ground truth, unsupervised anomaly detection models may be applied to identify degradation patterns based on statistical deviations from expected behavior.

The pipeline depicted here supports modular design principles that separate training and inference responsibilities. While the training path focuses on flexible preprocessing and model experimentation, the inference path (detailed elsewhere) is optimized for real-time execution, low latency, and production governance.

Model selection in the training layer 750 may be informed by use case and tolerance for false positives or negatives. For example, a two-tier strategy may be used where a high-confidence model with very high precision is designated for triggering autonomous actions (e.g., outcasting or dynamic job deferral), while a secondary model with higher recall is used for exploratory diagnostics or augmented scheduling. In environments where class imbalance is extreme, focal loss or re-weighting strategies may be used to improve detection of minority-class events (e.g., machine failures). Metrics such as precision-recall area under curve (PR-AUC) and true positive rate at low false positive thresholds are prioritized during model evaluation to reflect operational constraints.

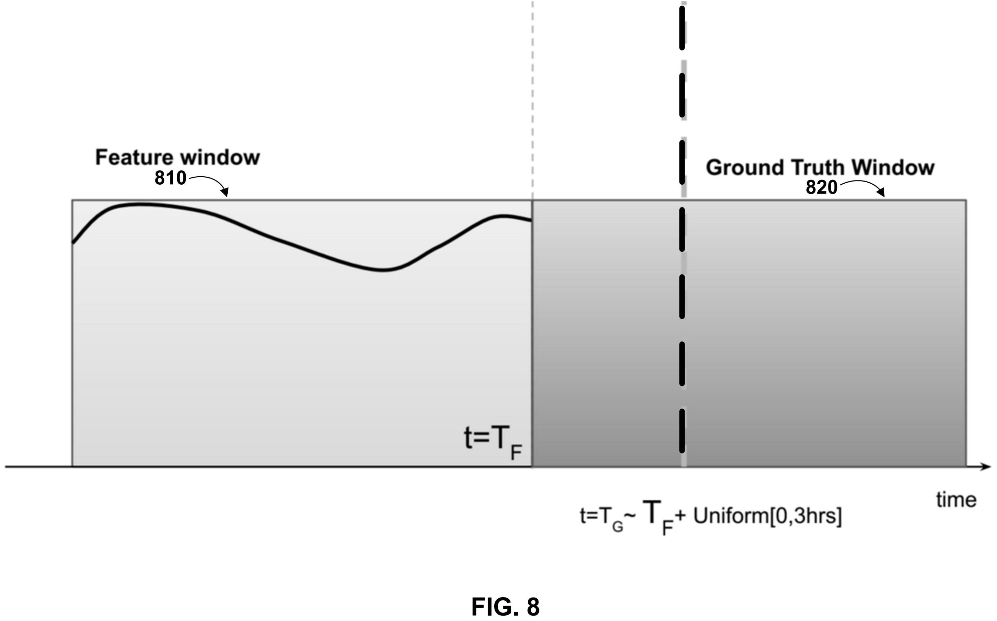

FIG. 8 is a diagram illustrating a time-series alignment strategy used in preparing data for forecasting machine health outcomes, in accordance with one or more aspects of the present disclosure. The approach distinguishes between a feature window 810, which aggregates telemetry data up to a final timestamp *T_{F},* and a ground truth window 820, which spans from a subsequent timestamp *T_{G}* through a forecast interval during which machine health degradation may be observed.

The alignment process ensures that each training instance reflects a meaningful prediction task. Specifically, *T_{G}* is sampled using a randomized delay: *T_{G} ~ T_{F} + Uniform* [0, *N*]. This introduces variability in the time gap between the end of the observation period and the time when the failure occurs. Such variability models the system's ability to forecast degradations that may emerge in a N hour window after the observation window.

The prediction task is therefore defined as: Given telemetry ending at *T_{F},* does failure occur within the window [*T_{G}, T_{G}* + *N* ]?

By varying the lead time between feature capture and failure labeling, the method more accurately reflects real-world uncertainty around symptom onset. It also improves model generalization and mitigates overfitting to rigid or deterministic intervals.

Aligned feature/label pairs generated using this alignment approach are passed to supervised learning pipelines, such as those illustrated in FIG. 7, to train predictive models capable of estimating future failure risk at the machine level.

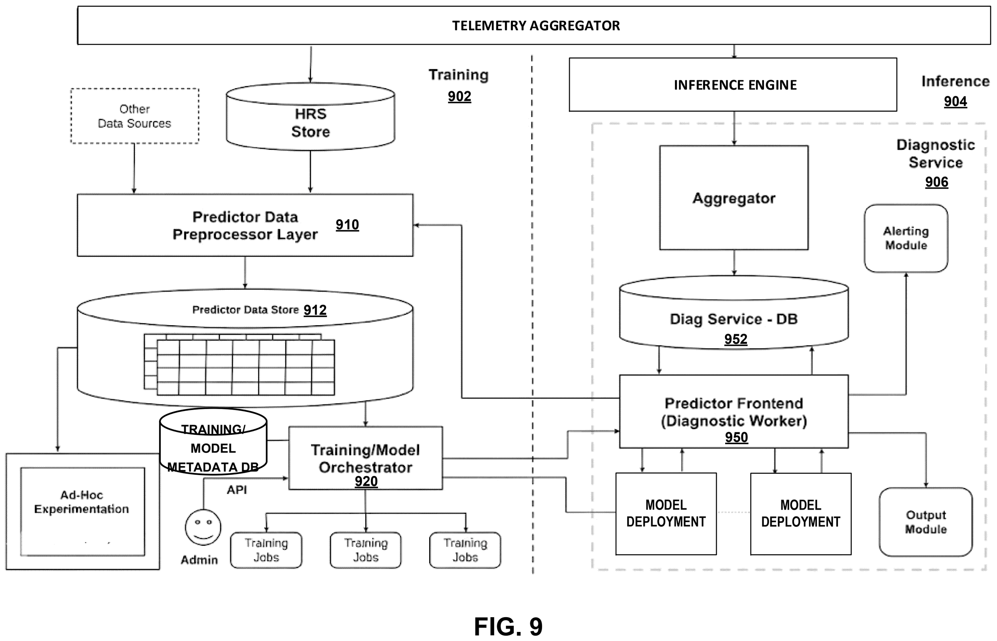

FIG. 9 illustrates a deployment architecture that separates the training and inference subsystems of the predictive modeling platform, in accordance with one or more aspects of the present disclosure. This architectural separation allows for independent management of data latency, model experimentation, and production stability constraints.

On the left side of the figure, the training subsystem 902 ingests telemetry data from health reporting systems and other upstream data sources. A Data Preprocessor Layer 910 normalizes logs and telemetry streams before storing them in a Predictor Data Store 912. This preprocessed data supports both ad-hoc experimentation (e.g., via notebooks or other interactive environments) and formalized model training workflows.

A Training/Model Orchestrator 920 coordinates the model lifecycle, including triggering training jobs, capturing training results, and managing metadata. Once models are validated and approved for production, the orchestrator 920 facilitates controlled model deployment to the inference subsystem 904. Metadata associated with training configurations and outcomes is stored in a dedicated database and may be accessed via APIs.

The inference subsystem 904 (shown on the right side) operates within a diagnostic service environment 906. Incoming telemetry is aggregated and passed to the Predictor Frontend 950, a diagnostic worker component that performs real-time inference using the deployed models. Inference results are stored in a diagnostics database 952 and may trigger downstream actions, such as alerting, monitoring updates, or operational adjustments.

A feedback loop is established between the inference subsystem 904 and training subsystem 902, enabling model performance tracking, A/B testing, and automated retraining when necessary. This modularized framework ensures that experimentation and model tuning can proceed without interfering with real-time service operations.

This architecture supports scalable, maintainable deployment of machine learning-based health prediction systems, enabling rapid iteration in the training domain and robust, low-latency inference in production environments.

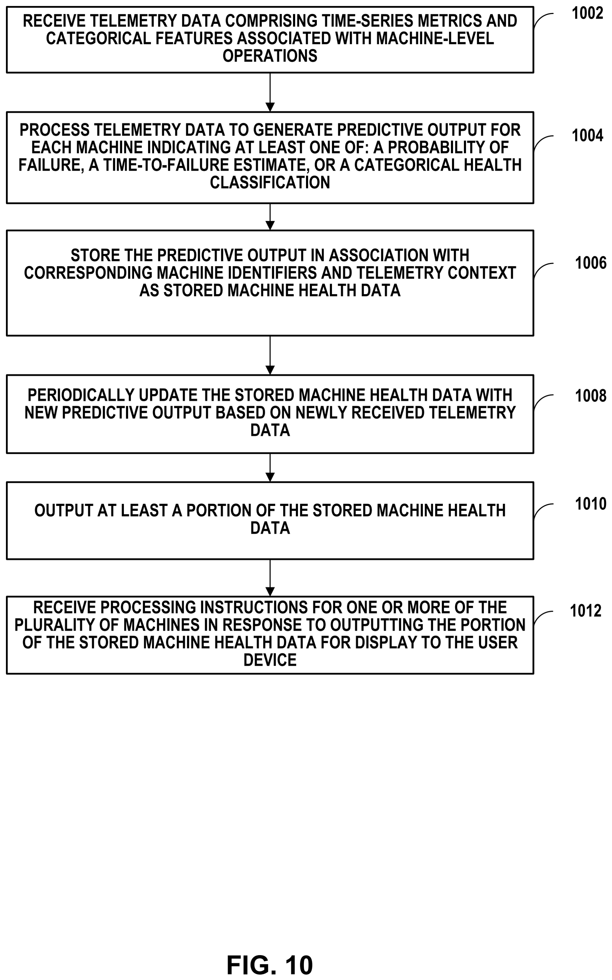

FIG. 10 is a flow chart illustrating an example operation of the processing and outputting of the predictive output for machine health forecasting, in accordance with one or more techniques of this disclosure. In some examples, one or more of the illustrated steps of the operation of FIG. 10 may be merged, performed in a different sequence, or omitted. In further examples the operation may include additional steps not specifically illustrated or described with respect to FIG. 10.This disclosure includes the following examples.

Example 1 - A method comprising: receiving, by one or more processors from a plurality of machines in a distributed computing environment, telemetry data comprising time-series metrics and categorical features associated with machine-level operations; processing, by the one or more processors using a machine learning model, the telemetry data and categorical features to generate predictive output for each machine; storing, by the one or more processors, the predictive output in association with corresponding machine identifiers and telemetry context for the plurality of machines as stored machine health data; periodically updating, by the one or more processors using the machine learning model, the stored machine health data with new predictive output based on newly received telemetry data for the plurality of machines; outputting, by the one or more processors and for display by a user device, at least a portion of the stored machine health data; and receiving, by the one or more processors, processing instructions for one or more of the plurality of machines in response to outputting the portion of the stored machine health data.

Example 2 - The method of example 1, further comprising: outputting, by the one or more processors for display by the user device, one or more predictive health indicators derived from the predictive output, the predictive health indicators comprising at least one of: a categorical risk classification, a time-to-failure estimate, or a machine-level failure probability.

Example 3 - The method of example 1 or 2, further comprising: receiving, by the one or more processors from the user interface, one or more mitigation actions associated with a selected machine based on the predictive health indicators, the one or more mitigation actions comprising at least one of: initiating a checkpoint, shortening job duration, swapping the selected machine with a different machine, excluding the machine from active job scheduling, or assigning the machine to reduced criticality workloads.

Example 4 - The method of any of examples 1-3, further comprising: providing, by the one or more processors, the predictive output to a job orchestration service, the job orchestration service configured to: adjust workload placement based on machine-level health status, defer job execution on machines predicted to fail, or reallocate training jobs using elastic scheduling policies based on service-level objectives.

Example 5 - The method of any of examples 1-4, further comprising: logging, by the one or more processors, the telemetry data and the predictive output for use in at least one of: failure tracking, diagnostic system evaluation, model drift detection, or continuous model retraining.

Example 6 - The method of any of examples 1-5, wherein the telemetry data comprises one or more of: GPU or TPU temperature metrics; power consumption data; streaming multiprocessor utilization; networking activity data; error counters; device type identifiers; geographic coordinates; regional identifiers; temperature measurements; humidity measurements; air quality measurements; electrical grid quality measurements; or manufacturing metadata.

Example 7 - The method of any of examples 1-6, wherein the processing comprises: aligning the telemetry data within a sliding observation window ending at a final timestamp *T_{F}* ; and generating the predictive output trained on whether a failure occurs during a ground truth window beginning at timestamp *T_{G},* wherein *T_{G}* is offset from *T_{F}* by a randomized delay.

Example 8 - The method of any of examples 1-7, wherein the processing further comprises: masking telemetry data preceding previously identified unhealthy intervals; imputing missing values using interpolation or placeholder values; and encoding categorical features via one-hot encoding.

Example 9 - The method of any of examples 1-8, wherein the machine learning model comprises at least one of: a one-dimensional convolutional neural network (1D-CNN); a gradient-boosted decision tree (GBDT); a transformer-based sequence model; or a mixture-of-experts architecture.

Example 10 - The method of any of examples 1-9, wherein: each machine is labeled as UNHEALTHY when a first threshold quantity of successive time points in the prediction window are also labeled unhealthy; and each machine is labeled as HEALTHY when a second threshold number of successive time points are labeled healthy.

Example 11 - The method of any of examples 1-10, wherein the predictive output comprises: a numerical probability score; a time-to-failure estimate; or a categorical classification selected from the group consisting of HEALTHY, WARNING, and UNHEALTHY.

Example 12 - A computing system comprising: a machine learning model; one or more processors; and non-transitory computer-readable media storing instructions that, when executed by the one or more processors, configure the one or more processors to: receive telemetry data from a plurality of machines in a distributed computing environment, the telemetry data comprising time-series metrics and categorical features associated with machine-level operations; process the telemetry data using the machine learning model to generate predictive output for each machine; store the predictive output in association with corresponding machine identifiers and telemetry context for the plurality of machines as stored machine health data; periodically update the stored machine health data with new predictive output based on newly received telemetry data for the plurality of machines using the machine learning model; output, for display by a user device, at least a portion of the stored machine health data; and receive processing instructions for one or more of the plurality of machines in response to outputting the portion of the stored machine health data.

Example 13 - The computing system of example 12, wherein the instructions further configure the one or more processors to: output, for display by the user device, one or more predictive health indicators derived from the predictive output, the predictive health indicators comprising at least one of: a categorical risk classification; a time-to-failure estimate; or a machine-level failure probability.

Example 14 - The computing system of example 12 or 13, wherein the instructions further configure the one or more processors to: receive, from a user interface one or more mitigation actions associated with a selected machine based on the predictive health indicators, the one or more mitigation actions comprising at least one of: initiating a checkpoint; shortening job duration; swapping the selected machine with a different machine; excluding the machine from active job scheduling; or assigning the machine to reduced criticality workloads.

Example 15 - The computing system of any of examples 12-14, wherein the instructions further configure the one or more processors to: provide the predictive output to a job orchestration service, the job orchestration service configured to: adjust workload placement based on machine-level health status; defer job execution on machines predicted to fail; or reallocate training jobs using elastic scheduling policies based on service-level objectives.

Example 16 - The computing system of any of examples 12-15, wherein the instructions further configure the one or more processors to: log the telemetry data and the predictive output for use in at least one of: failure tracking; diagnostic system evaluation; model drift detection; or continuous model retraining.

Example 17 - The computing system of any of examples 12-16, wherein the telemetry data comprises one or more of: GPU or TPU temperature metrics; power consumption data; streaming multiprocessor utilization; networking activity data; error counters; device type identifiers; geographic coordinates; regional identifiers; temperature measurements; humidity measurements; air quality measurements; electrical grid quality measurements; or manufacturing metadata.

Example 18 - The computing system of any of examples 12-17, wherein the instructions further configure the one or more processors to: align the telemetry data within a sliding observation window ending at a final timestamp *T_{F}*; and generate the predictive output trained on whether a failure occurs during a ground truth window beginning at timestamp *T_{G}* , wherein *T_{G}* is offset from *T_{F}* by a randomized delay.

Example 19 - The computing system of any of examples 12-18, wherein the instructions further configure the one or more processors to: mask telemetry data preceding previously identified unhealthy intervals; impute missing values using interpolation or placeholder values; and encode categorical features via one-hot encoding.

Example 20 - Non-transitory computer-readable storage media comprising instructions that, when executed, configure one or more processors of a computing system to: receive telemetry data from a plurality of machines in a distributed computing environment, the telemetry data comprising time-series metrics and categorical features associated with machine-level operations; process the telemetry data using a machine learning model to generate predictive output for each machine; store the predictive output in association with corresponding machine identifiers and telemetry context for the plurality of machines as stored machine health data; periodically update the stored machine health data with new predictive output based on newly received telemetry data for the plurality of machines using the machine learning model; output at least a portion of the stored machine health data for display by a user device; and receive processing instructions for one or more of the plurality of machines in response to outputting the portion of the stored machine health data.

Example 21 - A computer program product comprising one or more instructions that, when executed by at least one processor, cause the at least one processor to perform any of the methods of examples 1-11.

Example 22 - A device comprising means for performing any of the methods of examples 1-11.

By way of example, and not limitation, such computer-readable storage media can comprise RAM, ROM, EEPROM, CD-ROM or other optical disk storage, magnetic disk storage, or other magnetic storage devices, flash memory, or any other storage medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage mediums and media and data storage media do not include connections, carrier waves, signals, or other transient media, but are instead directed to non-transient, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of a computer-readable medium.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structures or any other structures suitable for implementation of the techniques described herein. In addition, in some aspects, the functionality described herein may be provided within dedicated hardware and/or software modules. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

Various examples have been described. These and other examples are within the scope of the following claims.

## Claims

1. A method comprising:
receiving, by one or more processors from a plurality of machines in a distributed computing environment, telemetry data comprising time-series metrics and categorical features associated with machine-level operations;
processing, by the one or more processors using a machine learning model, the telemetry data to generate a predictive output for each machine;
storing, by the one or more processors, the predictive output in association with corresponding machine identifiers and telemetry context for the plurality of machines as stored machine health data;
periodically updating, by the one or more processors using the machine learning model, the stored machine health data with new predictive output based on newly received telemetry data for the plurality of machines;
outputting, by the one or more processors and for display by a user device, at least a portion of the stored machine health data; and
receiving, by the one or more processors, processing instructions for one or more of the plurality of machines in response to outputting the portion of the stored machine health data.

2. The method of claim 1, further comprising:
outputting, by the one or more processors and for display by the user device, one or more predictive health indicators derived from the predictive output, the predictive health indicators comprising at least one of:
a categorical risk classification,
a time-to-failure estimate, or
a machine-level failure probability.

3. The method of claim 2, further comprising:
receiving, by the one or more processors from a user interface, one or more mitigation actions associated with a selected machine based on the predictive health indicators, the one or more mitigation actions comprising at least one of:
initiating a checkpoint,
shortening job duration,
swapping the selected machine with a different machine,
excluding the machine from active job scheduling, or
assigning the machine to reduced criticality workloads.

4. The method of one of claims 1 to 3, further comprising:
providing, by the one or more processors, the predictive output to a job orchestration service, the job orchestration service configured to:
adjust workload placement based on machine-level health status,
defer job execution on machines predicted to fail, or
reallocate training jobs using elastic scheduling policies based on service-level objectives.

5. The method of one of claims 1 to 4, further comprising:
logging, by the one or more processors, the telemetry data and the predictive output for use in at least one of:
failure tracking,
diagnostic system evaluation,
model drift detection, or
continuous model retraining.

6. The method of one of claims 1 to 5, wherein the telemetry data comprises one or more of:
GPU or TPU temperature metrics;
power consumption data;
streaming multiprocessor utilization;
networking activity data;
error counters;
device type identifiers;
geographic coordinates;
regional identifiers;
temperature measurements;
humidity measurements;
air quality measurements;
electrical grid quality measurements; or
manufacturing metadata.

7. The method of one of claims 1 to 6, wherein the processing comprises:
aligning the telemetry data within a sliding observation window ending at a final timestamp *T_{F};* and
generating the predictive output based on whether a failure occurs during a ground truth window beginning at timestamp *T_{G},* wherein *T_{G}* is offset from *T_{G}* by a randomized delay.

8. The method of one of claims 1 to 7, wherein the processing further comprises:
masking telemetry data preceding previously identified unhealthy intervals;
imputing missing values using interpolation or placeholder values; and
encoding categorical features via one-hot encoding.

9. The method of one of claims 1 to 8, wherein the machine learning model comprises at least one of:
a one-dimensional convolutional neural network, 1D-CNN,;
a gradient-boosted decision tree, GBDT;
a transformer-based sequence model; or
a mixture-of-experts architecture.

10. The method of one of claims 1 to 9, wherein:
each machine is labeled as UNHEALTHY when a first threshold quantity of successive time points in the prediction window are also labeled unhealthy; and
each machine is labeled as HEALTHY when a second threshold number of successive time points are labeled healthy.

11. The method of one of claims 1 to 10, wherein the predictive output comprises:
a numerical probability score;
a time-to-failure estimate; or
a categorical classification selected from the group consisting of HEALTHY, WARNING, and UNHEALTHY.

12. A computing system comprising:
a machine learning model;
one or more processors; and
non-transitory computer-readable media storing instructions that, when executed by the one or more processors, configure the one or more processors to perform the method of one of claims 1 to 11.

13. Non-transitory computer-readable storage media comprising instructions that, when executed, configure one or more processors of a computing system to perform the method of one of claim 1 to 11.

14. A computer program comprising instructions which, when the program is executed by a computer, cause the computer to carry out the method of one of claims 1 to 11.
